# EUROPEAN PATENT SPECIFICATION

(11) **EP 1 534 934 B1**
(45) Date of publication and mention of the grant of the patent: **23.05.2007**
(21) Application number: 03736417.1
(22) Date of filing: 01.07.2003
(51) Int. Cl.: F01D 9/04, B23P 15/04

(54) **METHOD FOR MANUFACTURING A STATOR COMPONENT**
VERFAHREN ZUR HERSTELLUNG EINER STATORKOMPONENTE
PROCEDE DE PRODUCTION D'UN STATOR

(30) Priority: 14.08.2002 SE 0202421; 14.08.2002 US 402947 P
(43) Date of publication of application: 01.06.2005
(73) Proprietor: Volvo Aero Corporation, 46181 Trollhättan (SE)
(72) Inventor: LUNDGREN, Jan, S-450 33 Grundsund (SE); HALLQVIST, Mats, S-467 40 Grästorp (SE)
(74) Representative: Fröhling, Werner Otto
(86) International application number: PCT/SE2003/001144
(87) International publication number: WO 2004/016910

(56) References cited:
- GB-A- 918 692
- US-A- 5 483 034
- US-B1- 6 217 282
- US-B1- 6 261 053

## Description

### FIELD OF THE INVENTION

The present invention relates to a method for manufacturing a stator component which is intended during operation to conduct a gas flow. The stator component can, for example, be used in a gas turbine and especially in a jet engine.

Jet engine is meant to include various types of engines which admit air at relatively low velocity, heat it by combustion and shoot it out at a much higher velocity. Accommodated within the term jet engine are, for example, turbojet engines and turbo-fan engines.

A component of this kind, comprising an outer and an inner ring with wall parts arranged between the rings, can be arranged with a view to primarily being force-transmitting in the radial and axial direction. The wall parts can, for example, form hollow blades, which are usually shaped such that they offer as little air resistance as possible. The component can, for example, be arranged in a rear or front stand, or in an intermediate housing in a jet engine. The blades are often referred to in such a case as stays or "struts". Struts can, however, also be formed by other types of parts than hollow blades.

### PRIOR ART

According to the prior art, wall parts in the form of hollow blades are arranged at a distance apart in the circumferential direction of the component between an inner and an outer ring. The hollow blades are joined together with the rings by welding. Each of the rings are made in this case firstly with portions of the same cross-dimensional shape and size as the blades, protruding in the radial direction. Such protruding portions are often referred to as "stubs". Each of the blades are then welded to a protruding portion of this kind by means of a butt joint. The radially protruding portions are usually mill-cut from a ring. This is a time-consuming and costly operation.

US 6,217,282 discloses a gas turbine component made up of a plurality of vane elements assembled in a side-by-side relationship. Each vane element has a vane blade with platforms at its outer and inner ends. The vane elements are assembled by engaging a projection of one platform with a recess of an adjacent platform.

### SUMMARY OF THE INVENTION

One object of the invention is to achieve a method for manufacturing a stator component which creates preconditions for a more high-strength component in relation to the prior art, with long working life. Further, a more time-effective and cost-effective manufacture is sought.

This object is achieved by the method according to claim 1. Said gas-flow-guidance or load-transmission means are thus made up of two separate wall parts, one from each section. This means will thus delimit adjoining gas ducts in the circumferential direction. The gas ducts thus extend in the axial direction of the component.

According to a preferred embodiment, a third wall part is arranged such that it extends between the first and second wall part and is connected thereto so as to define the gas duct in a first direction in the radial direction of the component. This produces a structurally strong construction, with the third wall part also acting as a stiffening means and spacer.

According to a refinement of the previous embodiment, the edge of the third wall part is laser-welded to said first and second wall part from an, in the circumferential direction, opposite side of the same in relation to the third wall part in such a way that the joined-together portions of the wall parts form a T-shaped joint.

By the edge of the wall part is meant the elongated surface which delimits the side faces, or flat sides, of the wall part. Given an appropriate choice of material parameters and welding parameters, a T-shaped joint with rounded corners, or at least a relatively smooth transition, can be obtained between the wall parts. This produces a structurally strong construction and hence an extended working life. Alternatively, a construction with thinner wall thicknesses and hence reduced weight can be obtained.

According to another preferred embodiment, the first and second wall part form portions of an essentially U-shaped single element.

Further preferred embodiments of and advantages with the invention can be ascertained from the further subclaims and the following description.

### BRIEF DESCRIPTION OF THE FIGURES

The invention will be described in greater detail below, with reference to the embodiments shown in the appended drawings, in which:
- FIG 1-5: show, in projections, different steps in the manufacture of the component according to a first embodiment,
- FIG 6-11: show, in projections, different steps in the manufacture of the component according to a second embodiment, and
- FIG 12: shows a cross section of a laser-welded joint in the component.

### DETAILED DESCRIPTION OF PREFERRED EMBODIMENTS

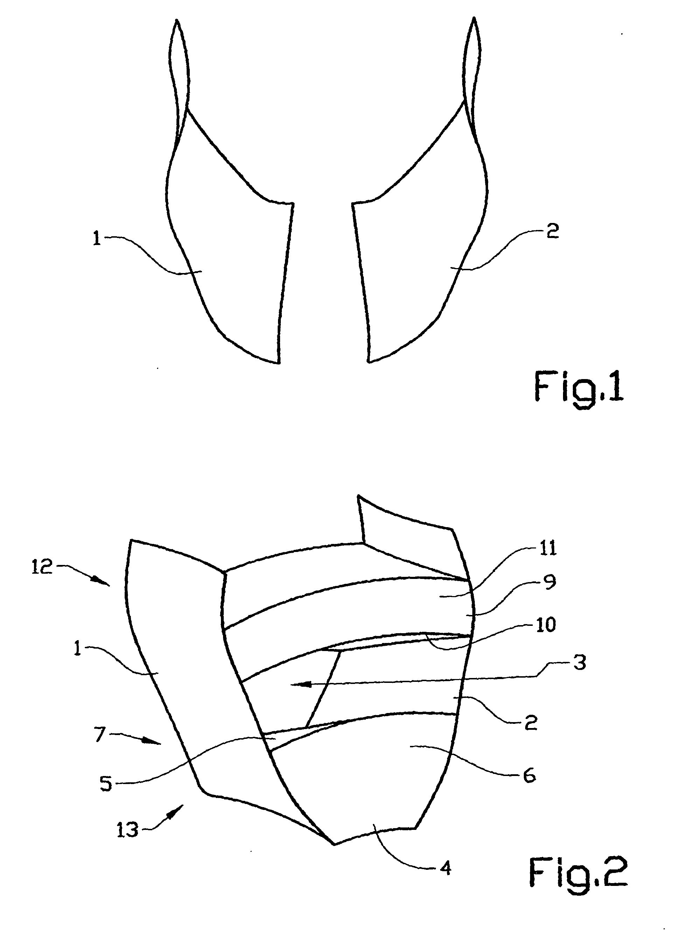

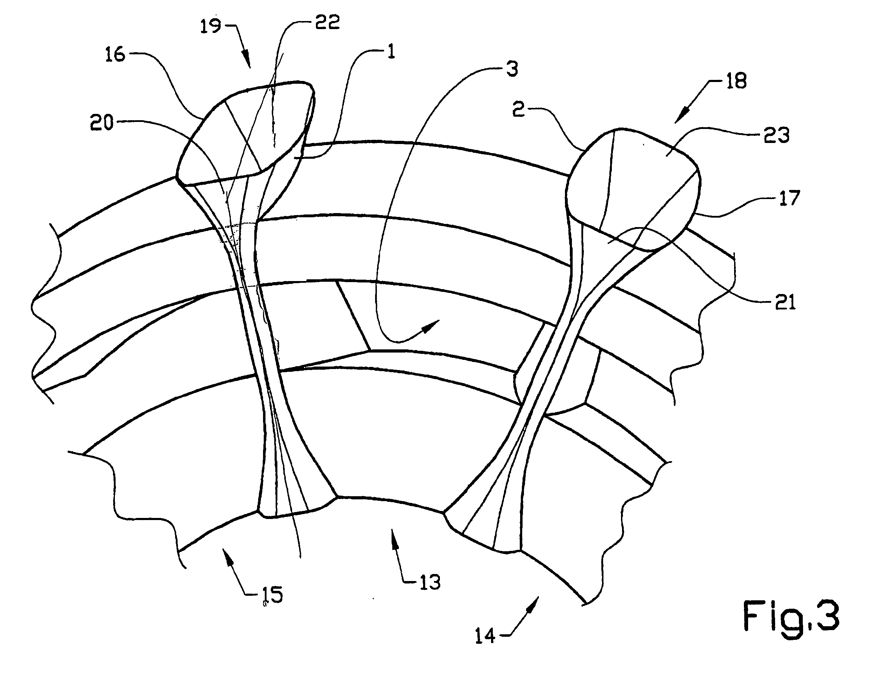

In figure 1 and 2 are shown a first wall part 1 and a second wall part 2, which are intended to form part of a first section 13, see Figure 3, of a stator component according to a first embodiment. The wall parts 1, 2 have an essentially identical, curved shape and are placed at a distance apart such that the concave sides face each other. In other words, the wall parts 1, 2 represent in figure 1 a mirror image of each other. The wall parts can, however, also have a mutually different configuration. The wall parts 1, 2 are arranged so as to define a gas duct 3 between them in the circumferential direction of the component, see figure 2.

A first plate-shaped member 4, having a shape corresponding to the space between the first and second wall part 1, 2, is then placed between these, see figure 2. The plate-shaped member 4 has a U-shaped cross section and is constituted, for example, by a bent, or folded plate. An intermediate portion 5 of the plate-shaped member 4 forms a third wall part, which limits the gas duct 3 inwardly in the radial direction. The side or plate portions 6, 7 of the plate-shaped member 4 have a shape and size corresponding to the space between the first and second wall part 1, 2. The flat sides of the side or plate portions 6, 7 thus face in the axial direction.

The third wall part 5 is connected to the first and second wall part 1, 2 by the edge of the third wall part 5 being laser-welded to the flat side of said first and second wall part 1, 2 from an opposite side of the same in relation to the third wall part in such a way that the joined-together portions of the wall parts form a T-shaped joint 8, see figure 12. The side portions 6, 7 of the plate-shaped member 4, too, are connected to the first and second wall part 1, 2, expediently by laser-welding. Expediently, the side portions 6, 7 and the third wall part 5 are connected to the first and second wall part by a continuous weld.

Further, a second plate-shaped member 9 having a shape corresponding to the space between the first and second wall part 1, 2 is placed between these, see figure 2. The plate-shaped member 9 has a square cross section and is constituted, for example, by a bent, welded-together plate. A portion 10 of the plate-shaped member 9 forms a fourth wall part which limits the gas duct 3 outwardly in the radial direction. The side or plate portions 11, 12 of the second plate-shaped member 9 have a shape and size corresponding to the space between the first and second wall part 1, 2. The flat sides of the side or plate portions 11, 12 thus face in the axial direction.

The fourth wall part 10 is connected to the first and second wall part 1, 2 by the edge of the fourth wall part 10 being laser-welded to the flat side of said first and second wall part 1, 2 from an opposite side of the same in relation to the third wall part in such a way that the joined-together portions of the wall parts form a T-shaped joint 8, see figure 12. The side portions 11, 12 of the plate-shaped member 9, too, are connected to the first and second wall part 1, 2, expediently by laser-welding.

A plurality of identically configured sections 13, 14, 15, made according to the description above, are then arranged side by side, see figure 3. The first and second wall part 1, 2 of the first section 13 are connected to a corresponding wall part 16, 17 of the sections 14, 15 adjoining in the circumferential direction. The mutually connected wall parts 1, 16, 2, 17 together form means 18, 19 for guidance of a gas flow and/or transmission of load in the radial direction during operation of the component. The adjoining wall parts 1, 16, 2, 17 are connected in figure 3 by two cover walls 20, 21, 22, 23, which thus enclose a space between the wall parts.

The wall parts 1, 2 thus extend substantially in the radial direction of the component. In addition, they have an extent substantially in the axial direction of the component.

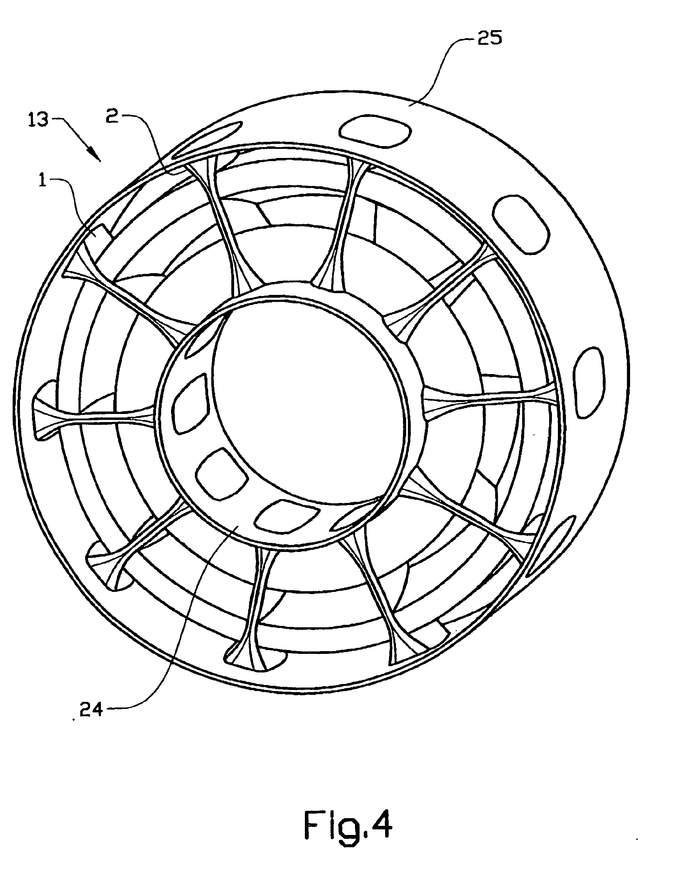

A ring element 24 is then arranged radially inside the first and second wall part 1, 2 and are connected thereto, see figure 4. Correspondingly, a ring element 25 is arranged radially outside the first and second wall part 1, 2 and is connected thereto. The ring elements 24, 25 are here constituted by plate-shaped bands, which are continuous in the circumferential direction of the component. The respective ring elements 24, 25 are connected to the wall parts 1, 2 by the ring-elements-facing edge of the wall parts 1, 2 being laser-welded to the flat side of the ring elements from an opposite side of these in relation to the wall parts in such a way that the joined-together portions form a T-shaped joint 8, see figure 12. In other words, laser-welding is performed from the inside of the inner ring outwardly in the radial direction and from the outside of the outer ring inwardly in the radial direction.

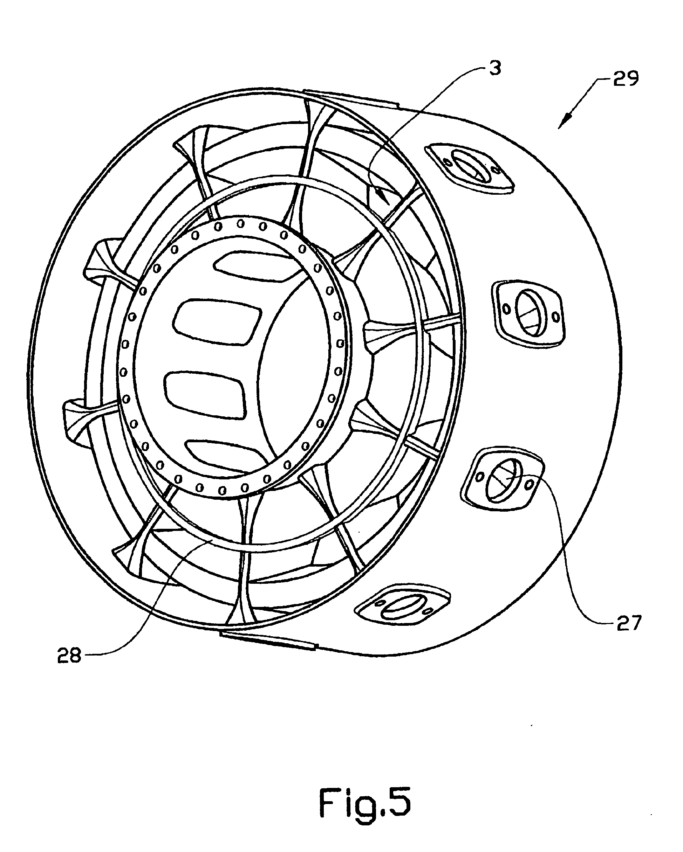

A hole 27 is then cut out through said outer ring element 25 between each section or, in other words, at the positions for the spaces between two adjoining wall parts. These holes 27 can now be used to house various means for feeding of the component, such as means for the intake and outtake of oil and/or air, for housing instruments, such as electrical and metallic cables for transfer of information concerning measured pressure and/or temperature. The holes 27 can also be used to conduct coolant. Further, on each side of the component in the axial direction, a circular-shaped flange, or stiffening rib 28, is arranged, which bears against the wall parts 1, 2, see figure 5.

In figure 5 is shown the stator component 29 made according to the first preferred embodiment of the invention. The gas ducts 3 thus extend in the axial direction of the component. The stator component 29 can, for example, form a load-bearing structure between bearings arranged radially/axially on the inside and structures connected on the outside.

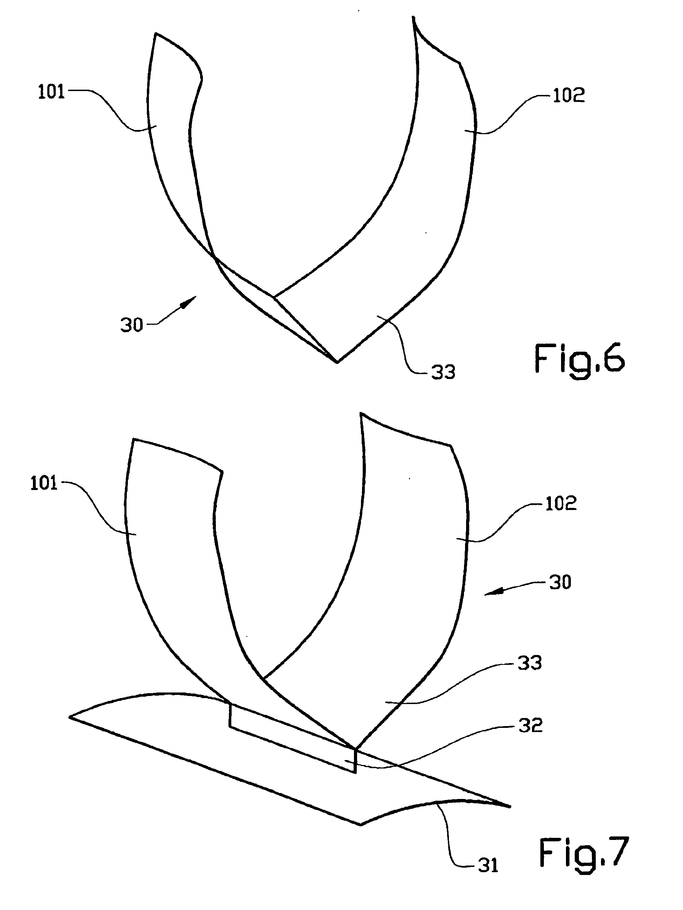

In figures 6-11 is shown an alternative, second embodiment of the invention. Only basic differences relative to the above-described first embodiment will be described below. A first wall part 101 and a second wall part 102 form portions of an essentially U-shaped single element 30, see figure 6. The two wall parts 101, 102 are thus integrated in one and the same element. Each of the two wall parts 101, 102 thus form a portion of the side members of the U-shaped element 30. The U-shaped element 30 further has a base 33, which connects the two side members.

The base 33 of the U-shaped element 30 is connected to a ring element 31 which only forms part of a ring, see figure 7. The ring element 31 has for this purpose a protruding rib 32, which extends in the intended axial direction of the component. The base 33 has a pointed shape and the pointed portion is connected to the rib 32, for example, by welding. In other words, each section has a separate inner ring element 31.

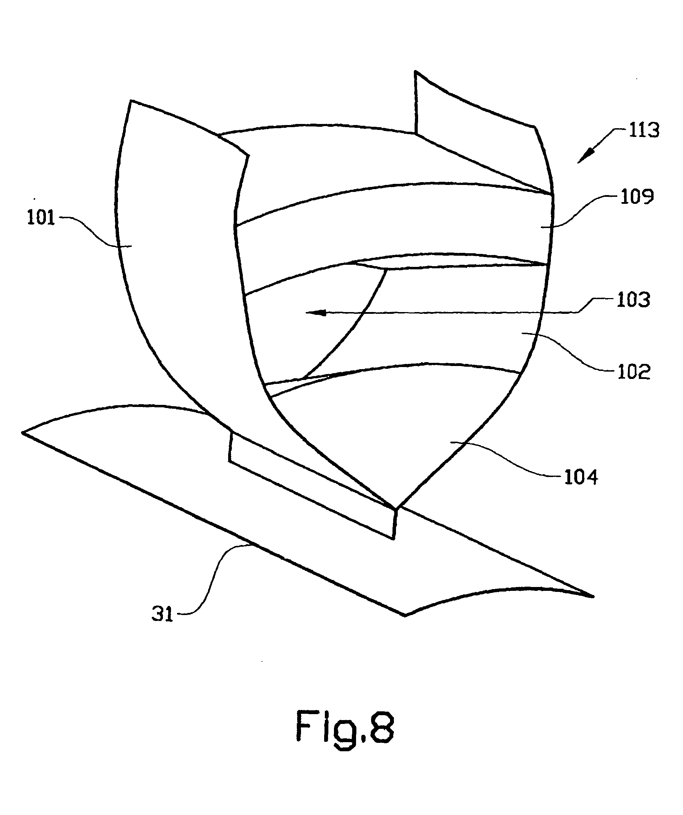

A first and second plate-shaped member 104, 109, which have a shape corresponding to the space between the first and second wall part 101, 102, are then placed between these in the same manner as described above for the first embodiment, see figure 8. Each of the plate-shaped members 104, 109 comprise a wall part which limits the gas duct 103 inwardly in the radial direction. In figure 8, a section 113 is therefore shown.

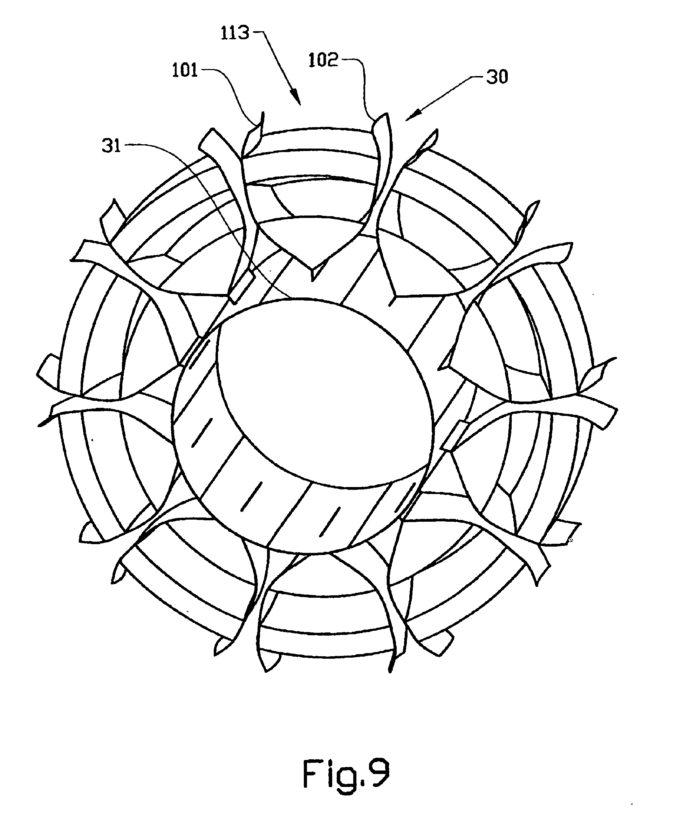

In figure 9 a plurality of said sections have been joined together in the circumferential direction. More precisely, it is said ring element 31 of each section which has been joined together with the ring elements of adjacent sections. The joining-together can be realized, for example, by welding.

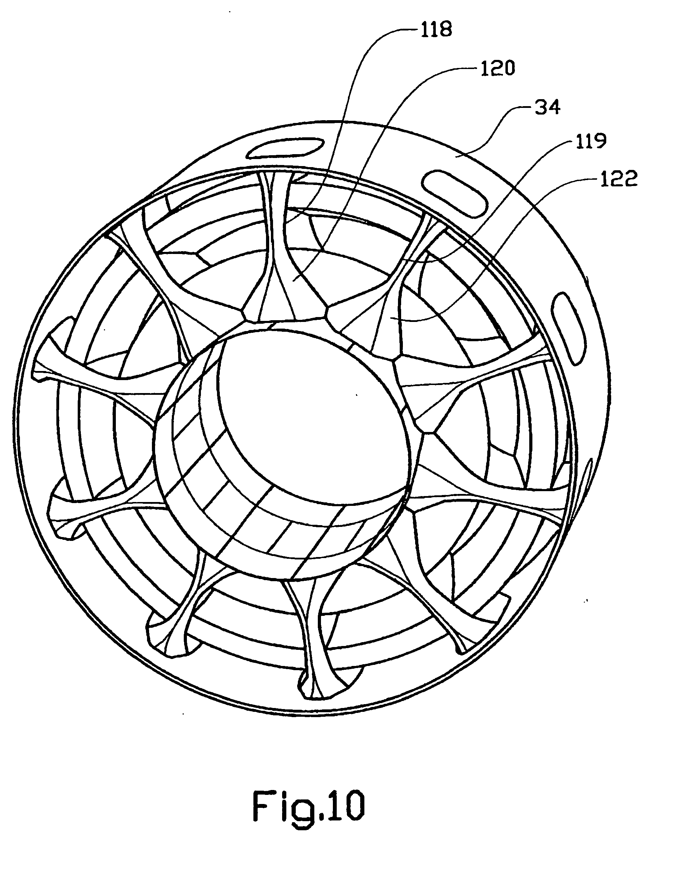

Cover walls 120, 122 are arranged between the wall parts of two adjoining sections and connected to the wall parts, see figure 10. The mutually connected wall parts together form means 118, 119 for guidance of a gas flow and/or transmission of load in the radial direction during operation of the component. In figure 10, an, in the radial direction, outer ring 34 has further been arranged outside the wall parts.

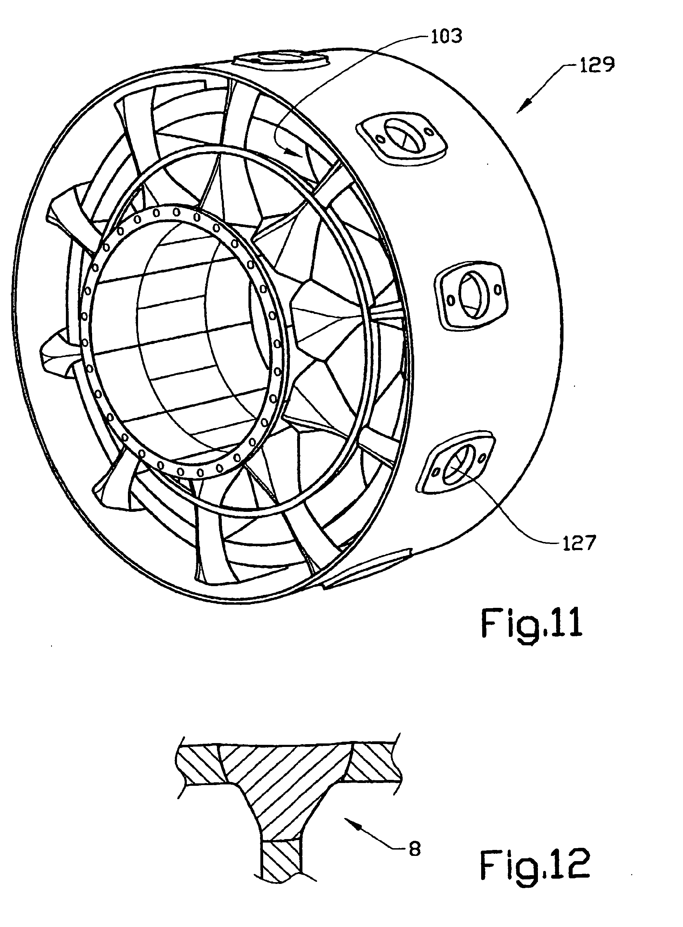

Holes 127 are then cut out through said outer ring 34 between each section or, in other words, at the positions for the spaces between two adjoining wall parts, see figure 11.

In figure 11 is shown the stator component 129 made according to the second preferred embodiment of the invention. The gas ducts 103 thus extend in the axial direction of the component. The stator component 129 can, for example, form a load-bearing structure between bearings arranged radially on the inside and a housing arranged radially on the outside.

In figure 12 is illustrated the above-described T-shaped weld joint 8. By T-joint 8 is meant, more precisely, that a portion of one of the wall parts and the ring elements, respectively, form the top part of the T and a portion of a second one of the wall parts forms the vertical part of the T, which connects to the top part.

By said plate-shaped members 4, 9, 104, 109 is meant that at least one portion has a plate-shape. The plate-shaped member can thus form the shape of a tube, a profile, etc. In other words, the plate-shaped members can be made from a disk or a plate, which is cut and folded into the desired shape, but other manufacturing techniques are also conceivable, such as crosscutting of tubes or profiles having the desired cross-sectional shape.

The materials which are used for the wall parts which are intended to be welded are constituted by weldable materials, such as stainless steel, for example of the type 347 or A286. Alternatively, nickel-based alloys, such as, for example, INCO600, INCO625, INCO718 and Hastaloy x, can be used. According to further variants, cobalt-based alloys, for example, of the type HAYNES 188 and HAYNES 230, can be used. Further, titanium alloys, such as Ti6-4, Ti6-2-4-2 and various types of aluminum alloys can be used. Combinations of different materials are also possible.

In the laser-welding, a Nd:YAG-laser is preferably used, but also other types of welding arrangements, for example a CO₂-laser, can be used according to the invention. By precise coordination of the welding method, materials choice and wall parts dimensions, the T-shape in respect of a particular joint and a relatively gently rounded shape 22 of the inner angle between the wall parts are obtained with the laser-welding, see figure 12. The welding is expediently realized by means of a continuous weld. The rounded shape of the weld joints produces a high-strength construction and hence long working life for the component. This type of joining-together creates preconditions for a complete melting of the weld joint and fine transitions between the parts.

In order for the weld joint to end up in exactly the right position, a previously known joint-following technique can be used. Preferably a continuous weld joint is applied.

Each of the wall parts have the shape of a plate. By plate-shape is meant that the wall part has two parallel side faces at a relatively short distance apart. Plate-shape is further meant to cover both the possibility of the wall part extending in one plane and that of it having a rounded or curved shape.

Should the wall parts have the purpose of being load-transmitting or load-bearing in the radial direction, that is to say when they form so-called struts or stays, an airfoil shape is not always required, nor the shape of hollow blades, but rather said plate-shape can suffice. A plurality of different configurations are, however, possible.

Should the second wall parts have the purpose of guiding a gas flow during operation of the component, the mutually connected second wall parts form the shape of a blade, for example, having an airfoil shape in cross section. Such a blade shape is utilized when the component is used in specific stator applications.

By the term ring element used above in the description is meant a continuously annular member, a substantially annular member interrupted in the circumferential direction, or a part which, together with other like parts, is intended to form an annular member. When a plurality of such ring elements are joined together in the circumferential direction, a ring is formed. By ring is meant a circumferential, band-shaped, preferably circular part, which spreads like a plate in the axial direction.

By the expression that the wall part extends in a certain direction with respect to the component is meant that at least one component of the extent of the wall part lies in this direction. Preferably, the wall part extends substantially in this direction. In other words, the wall part in question extends in a plane parallel with said direction.

The stator component can, for example, form an inlet part, an intermediate housing, a turbine-exhaust housing, that is to say a concluding housing part, or a part of this for a gas turbine. Its primary function is in this case to act as a bearing fastening, for the transmission of loads, and to provide a duct for gases.

The invention will not be deemed limited to the illustrative embodiments described above, but a host of further variants and modifications are conceivable within the scope of the subsequent patent claims.

According to one alternative, the second plate-shaped member 9 is made by crosscutting of a tube of square-shaped cross section.

The connection of a radially extending wall part of one to a radially extending wall part of an adjacent section can further be effected differently than arranging a cover plate between these. For example, the wall parts can be arranged relatively close together and connected by the application of material, or by welding, etc. Further, the cover plates can be fixed in a number of different of ways, such as riveting and gluing.

The mutual connection of two wall parts which are intended to define a gas duct, that is to say the connection of a wall part extending in the radial direction to a wall part extending in the circumferential direction, can be effected using a technique other than laser-welding, for example by soldering or another type of welding.

The manufacture of said wall parts can be effected in a number of different ways, for example by heat-forming and then cutting by laser, water jet or otherwise into the intended shape.

In the description above, each section is provided with two wall parts. It lies within the scope of the invention, however, for each section to have a different number of wall parts. According to one example, one section has three wall parts, which thus define two ducts. Further, not necessarily all the sections in a component are identically configured, but rather different sections in the same component can have different numbers of wall parts.

In certain constructions, the outer ring element 25 is not required.

## Claims

1. A method for manufacturing a stator component (29, 129) with an essentially circular cross-sectional shape and a plurality of ducts for conduction of a gas flow extending in the axial direction between an inner and an outer ring, which is intended during operation to conduct the gas flow, wherein the component is made up of at least two sections (13, 14, 15; 113) in its circumferential direction, which sections each have at least one wall part (1, 2; 101, 102) and wherein the sections are placed adjacent to each other and connected to each other **characterized in that** a first of said adjacent sections (13; 113) is constructed by a first wall part (1; 101) and a second wall part (2; 102) being spaced apart so as to define a gas duct (3; 103) between them in said circumferential direction, that two of said wall parts, one from each of two adjacent sections, are connected in order together to form a means (18, 19; 118, 119), extending in the radial direction of the component, for guidance of said gas flow and/or transmission of load during operation of the component.

2. The method as claimed in claim 1, **characterized in that** the first and second wall part (1, 2; 101, 102) are mutually arranged such that, in the intended position in the component, they at least partially extend essentially in the radial direction of the component.

3. The method as claimed in claim 1 or 2, **characterized in that** a third wall part (5) is arranged such that it extends between the first and second wall part and is connected thereto so as to define the gas duct in a first direction in the radial direction of the component.

4. The method as claimed in claim 3, **characterized in that** the edge of the third wall part (5) is laser-welded to said first and second wall part (1, 2) from an, in the circumferential direction, opposite side of the same in relation to the third wall part in such a way that the joined-together portions of the wall parts form a T-shaped joint (8).

5. The method as claimed in claim 3 or 4, **characterized in that** said third wall part (5) constitutes an intermediate portion of a first plate-shaped member (4), which has a shape corresponding to the space between the first and second wall part, and **in that** this plate-shaped member is placed between the first and second wall part.

6. The method as claimed in any of claims 3-5, **characterized in that** a fourth wall part (10) is arranged such that it extends between the first and second wall part (1, 2) and is connected thereto so as to define the gas duct in a second direction in the radial direction of the component.

7. The method as claimed in claim 6, **characterized in that** the edge of the fourth wall part (10) is laser-welded to said first and second wall part from an, in the circumferential direction, opposite side of the same in relation to the fourth wall part in such a way that the joined-together portions of the wall parts form a T-shaped joint (8).

8. The method as claimed in claim 6 or 7, **characterized in that** said fourth wall part (10) constitutes an intermediate portion of a second plate-shaped member (9), which has a shape corresponding to the space between the first and second wall part, and **in that** this plate-shaped member is placed between the first and second wall part.

9. The method as claimed in any of claims 1-8, **characterized in that** the first and second wall part (1, 2; 101, 102) are connected to an, in the radial direction, inner and/or outer ring element (24, 25; 31, 34).

10. The method as claimed in any of claims 1-9, **characterized in that** the first and second wall part (101, 102) form portions of an essentially U-shaped single element (30).

11. The method as claimed in claim 9 and 10, **characterized in that** the base (33) of the U-shaped element (30) is connected to the inner ring element (31)

12. The method as claimed in claim 9, 10 and 11, **characterized in that** the side members of the U-shaped element (30) are connected to the outer ring element (34).

13. The method as claimed in any of claims 1-12, **characterized in that** all the sections are constructed in the same manner as the first section.

14. The method as claimed in any of the preceding claims, **characterized in that** the stator component (29, 129) is intended for a gas turbine.

15. The method as claimed in any of the preceding claims, **characterized in that** the stator component (29, 129) is intended for a jet engine.

## Patentansprüche

1. Verfahren zur Herstellung eines Statorbauelements (29, 129), das während des Betriebs den Gasstrom leiten soll und das im wesentlichen eine Kreisquerschnittsform sowie eine Vielzahl von zum Leiten des Gasstroms vorgesehenen Kanälen hat, die sich in Axialrichtung zwischen einem inneren und einem äußeren Ring erstrecken, wobei
- das Bauelement in seiner Umfangsrichtung aus wenigstens zwei Abschnitten (13, 14, 15; 113) hergestellt wird, von denen jeder wenigstens ein Wandteil (1, 2; 101, 102) hat und
- die Abschnitte angrenzend aneinander angeordnet und miteinander verbunden werden,
**dadurch gekennzeichnet,**
- **dass** ein erster der benachbarten Abschnitte (13; 113) aus einem ersten Wandteil (1; 101) und einem zweiten Wandteil (2; 102) aufgebaut wird, die so beabstandet sind, dass zwischen ihnen in der Umfangsrichtung ein Gaskanal (3; 103) gebildet wird und
- **dass** zwei der Wandteile, nämlich eines von jedem von zwei benachbarten Abschnitten, verbunden werden, um zusammen eine Einrichtung (18, 19; 118, 119) zu bilden, die sich in der Radialrichtung des Bauelements zum Führen des Gasstroms und/oder zum Übertragen einer Last während des Betriebs des Bauelements erstreckt.

2. Verfahren nach Anspruch 1, **dadurch gekennzeichnet, dass** das erste und zweite Wandteil (1, 2; 101, 102) zueinander so angeordnet werden, dass sie in der vorgesehenen Position in dem Bauelement sich wenigstens teilweise im wesentlichen in der Radialrichtung des Bauelements erstrecken.

3. Verfahren nach Anspruch 1 oder 2, **dadurch gekennzeichnet, dass** ein drittes Wandteil (5) so angeordnet wird, dass es sich zwischen dem ersten und zweiten Wandteil erstreckt und damit so verbunden wird, dass der Gaskanal in einer ersten Richtung in der Radialrichtung des Bauelements gebildet wird.

4. Verfahren nach Anspruch 3, **dadurch gekennzeichnet, dass** der Rand des dritten Wandteils (5) mit dem ersten und zweiten Wandteil (1, 2) von einer in Umfangsrichtung gegenüberliegenden Seite derselben bezogen auf das dritte Wandteil so laserverschweißt wird, dass die miteinander verbundenen Abschnitte der Wandteile eine T-förmige Verbindung (8) bilden.

5. Verfahren nach Anspruch 3 oder 4, **dadurch gekennzeichnet, dass** das dritte Wandteil (5) einen Zwischenabschnitt eines ersten plattenförmigen Elements (4) bildet, das eine Form hat, die dem Zwischenraum zwischen dem ersten und zweiten Wandteil entspricht, und dass dieses plattenförmige Element zwischen dem ersten und zweiten Wandteil angeordnet wird.

6. Verfahren nach einem der Ansprüche 3 bis 5, **dadurch gekennzeichnet, dass** ein viertes Wandteil (10) so angeordnet wird, dass es sich zwischen dem ersten und zweiten Wandteil (1, 2) erstreckt und damit so verbunden wird, dass der Gaskanal in einer zweiten Richtung in der Radialrichtung des Bauelements gebildet wird.

7. Verfahren nach Anspruch 6, **dadurch gekennzeichnet, dass** der Rand des vierten Wandteils (10) mit dem ersten und zweiten Wandteil von einer in der Umfangsrichtung gegenüberliegenden Seite desselben bezogen auf das vierte Wandteil so laserverschweißt wird, dass die miteinander verbundenen Abschnitte der Wandteile eine T-förmige Verbindung (8) bilden.

8. Verfahren nach Anspruch 6 oder 7, **dadurch gekennzeichnet, dass** das vierte Wandteil (10) einen Zwischenabschnitt eines zweiten plattenförmigen Elements (9) bildet, das eine Form hat, die dem Zwischenraum zwischen dem ersten und zweiten Wandteil entspricht, und dass dieses plattenförmige Element zwischen dem ersten und zweiten Wandteil angeordnet wird.

9. Verfahren nach einem der Ansprüche 1 bis 8, **dadurch gekennzeichnet, dass** das erste und zweite Wandteil (1, 2; 101, 102) mit einem in der Radialrichtung inneren und/oder äußeren Ringelement (24, 25; 31, 34) verbunden werden.

10. Verfahren nach einem der Ansprüche 1 bis 9, **dadurch gekennzeichnet, dass** das erste und zweite Wandteil (101, 102) Abschnitte eines im wesentlichen U-förmigen einzelnen Elements (30) bilden.

11. Verfahren nach Anspruch 9 und 10, **dadurch gekennzeichnet, dass** die Basis (33) des U-förmigen Elements (30) mit dem inneren Ringelement (31) verbunden wird.

12. Verfahren nach Anspruch 9, 10 und 11, **dadurch gekennzeichnet, dass** die Seitenelemente des U-förmigen Elements (30) mit dem äußeren Ringelement (34) verbunden werden.

13. Verfahren nach einem der Ansprüche 1 bis 12, **dadurch gekennzeichnet, dass** alle Abschnitte genauso wie der erste Abschnitt aufgebaut werden.

14. Verfahren nach einem der vorhergehenden Ansprüche, **dadurch gekennzeichnet, dass** das Statorbauelement (29, 128) für eine Gasturbine vorgesehen wird.

15. Verfahren nach einem der vorhergehenden Ansprüche, **dadurch gekennzeichnet, dass** das Statorbauelement (29, 129) für ein Strahltriebwerk vorgesehen wird.

## Revendications

1. Procédé de fabrication d'un composant de stator (29, 129) ayant une forme de coupe transversale essentiellement circulaire, et une pluralité de conduits pour conduire un écoulement de gaz s'étendant dans la direction axiale entre des anneaux intérieur et extérieur, qui est prévu, en fonctionnement pour conduire l'écoulement de gaz, dans lequel le composant est constitué d'au moins deux tronçons (13, 14, 15 ; 113) dans sa direction circonférentielle, lesquels tronçons ont chacun au moins une partie de paroi (1, 2 ; 101, 102), et dans lequel les tronçons sont placés adjacents l'un à l'autre et reliés entre eux, **caractérisé en ce qu'**un premier desdits tronçons adjacents (13 ; 113) est construit par une première partie de paroi (1 ; 101) et une deuxième partie de paroi (2 ; 102) étant espacées afin de définir un conduit de gaz (3 ; 103) entre celles-ci dans ladite direction circonférentielle, **en ce que** deux desdites parties de paroi, une à partir de chacun de deux tronçons adjacents, sont reliées pour former ensemble des moyens (18, 19 ; 118, 119), s'étendant dans la direction radiale du composant, pour un guidage dudit écoulement de gaz et/ou une transmission de charge pendant le fonctionnement du composant.

2. Procédé selon la revendication 1, **caractérisé en ce que** les première et deuxième parties de paroi (1, 2 ; 101, 102) sont mutuellement agencées de sorte que, dans la position prévue dans le composant, elles s'étendent au moins partiellement essentiellement dans la direction radiale du composant.

3. Procédé selon la revendication 1 ou 2, **caractérisé en ce que** une troisième partie de paroi (5) est agencée de sorte qu'elle s'étend entre les première et deuxième parties de paroi, et y est reliée afin de définir le conduit de gaz dans une première direction dans la direction radiale du composant.

4. Procédé selon la revendication 3, **caractérisé en ce que** le bord de la troisième partie de paroi (5) est soudé au laser auxdites première et deuxième parties de paroi (1, 2) à partir, dans la direction circonférentielle, d'un côté opposé de celles-ci par rapport à la troisième partie de paroi, de telle manière que les parties reliées ensemble des parties de paroi forment un joint en forme de T (8).

5. Procédé selon la revendication 3 ou 4, **caractérisé en ce que** ladite troisième partie de paroi (5) constitue une partie intermédiaire d'un premier élément en forme de plaque (4), qui a une forme correspondant à l'espace entre les première et deuxième parties de paroi, et **en ce que** cet élément en forme de plaque est placé entre les première et deuxième parties de paroi.

6. Procédé selon l'une quelconque des revendications 3 à 5, **caractérisé en ce qu'**une quatrième partie de paroi (10) est agencée de sorte qu'elle s'étend entre les première et deuxième parties de paroi (1, 2), et y est reliée afin de définir le conduit de gaz dans une seconde direction dans la direction radiale du composant.

7. Procédé selon la revendication 6, **caractérisé en ce que** le bord de la quatrième partie de paroi (10) est soudé au laser auxdites première et deuxième parties de paroi à partir, dans la direction circonférentielle, d'un côté opposé de celles-ci par rapport à la quatrième partie de paroi, de telle manière que les parties reliées ensemble des parties de paroi forment un joint en forme de T (8).

8. Procédé selon la revendication 6 ou 7, **caractérisé en ce que** ladite quatrième partie de paroi (10) constitue une partie intermédiaire d'un second élément en forme de plaque (9), qui a une forme correspondant à l'espace entre les première et deuxième parties de paroi, et **en ce que** cet élément en forme de plaque est placé entre les première et deuxième parties de paroi.

9. Procédé selon l'une quelconque des revendications 1 à 8, **caractérisé en ce que** les première et deuxième parties de paroi (1, 2 ; 101, 102) sont reliées, dans la direction radiale, à l'élément annulaire intérieur et/ou extérieur (24, 25 ; 31, 34).

10. Procédé selon l'une quelconque des revendications 1 à 9, **caractérisé en ce que** les première et deuxième parties de paroi (101, 102) forment des parties d'un élément unique essentiellement en forme de U (30).

11. Procédé selon les revendications 9 et 10, **caractérisé en ce que** la base (33) de l'élément en U (30) est reliée à l'élément annulaire intérieur (31).

12. Procédé selon les revendications 9, 10 et 11, **caractérisé en ce que** les éléments latéraux de l'élément en U (30) sont reliés à l'élément annulaire extérieur (34).

13. Procédé selon l'une quelconque des revendications 1 à 12, **caractérisé en ce que** tous les tronçons sont construits de la même manière que le premier tronçon.

14. Procédé selon l'une quelconque des revendications précédentes, **caractérisé en ce que** le composant de stator (29, 129) est prévu pour une turbine à gaz.

15. Procédé selon l'une quelconque des revendications précédentes, **caractérisé en ce que** le composant de stator (29, 129) est prévu pour un moteur à réaction.
